Europäisches Patentamt

European Patent Office

Office européen des brevets

(11) Veröffentlichungsnummer: **0 086 734**
**B1**

(12) # EUROPÄISCHE PATENTSCHRIFT

(45) Veröffentlichungstag der Patentschrift:
23.09.87

(21) Anmeldenummer: 83730006.0

(22) Anmeldetag: 18.01.83

(51) Int. Cl.⁴: **H 02 B  13/02,** H 02 B  11/12

(54) Gekapselte, druckgasisolierte Hochspannungsschaltanlage.

(30) Priorität: 15.02.82  DE 8204536 U

(43) Veröffentlichungstag der Anmeldung:
24.08.83 Patentblatt 83/34

(45) Bekanntmachung des Hinweises auf die Patenterteilung:
23.09.87 Patentblatt 87/39

(84) Benannte Vertragsstaaten:
AT CH DE LI SE

(56) Entgegenhaltungen:
CH-A-558 094

(73) Patentinhaber: **Siemens Aktiengesellschaft Berlin
und München, Wittelsbacherplatz 2, D-8000
München 2 (DE)**

(72) Erfinder: **Olsen, Willi, Ing.- grad., Am Laubwald 3,
D-1000 Berlin 13 (DE)**
Erfinder: **Padderatz, Heinz, Ing.- grad.,
Braunschweiger Strasse 56, D-1000 Berlin 44 (DE)**
Erfinder: **Palm, Joachim, Ing.- grad., Am
Horstenstein 241, D-1000 Berlin 48 (DE)**
Erfinder: **Pircher, Christian, Potsdamer Strasse 93,
D-1000 Berlin 30 (DE)**

## Beschreibung

Die Erfindung bezieht sich auf eine gekapselte druckgasisolierte Hochspannungsschaltanlage mit einem unter anderen Druckbehältern liegenden insbesondere rohrförmigen, Druckbehälter aus elektrisch leitfähigem Material für den mit horizontaler Achse angeordneten Leistungsschalter bei der eine Stirnwand dieses Druckbehälters durch eine über Fahrrollen ausfahrbare Basisplatte gebildet ist, auf welcher auf der dem Innern des Druckbehälters zugewandten Seite die über Steck- bzw. Schraubverbindungen mit den anschließenden Stromleitern lösbar verbindbaren Unterbrechereinheiten des Leistungsschalters befestigt sind während die Außenseite der Basisplatte Antriebsteile trägt. Eine derartige Hochspannungsschaltanlage ist aus der Siemens-Zeitschrift 1975, Seiten 724 bis 726 bekannt.

Bei dieser bekannten Hochspannungsschaltanlage ist die Basisplatte durch die Montageplatte des Getriebegehäuses gebildet. Dieses enthält ein Umlenkgetriebe das die Bewegung des Kolbens im senkrecht angeordneten Hydraulikzylinder auf die Schaltkontakte der Unterbrechereinheit überträgt. Der Hydraulikzylinder liegt unterhalb des Getriebegehäuses und ist mit diesem verbunden. Die dazu gehörige Steuereinheit steht auf einer gesonderten fahrbaren Plattform und ist mit den Hydraulikaggregaten des Antriebes und dem Leistungsschaltergehäuse über Rohrleitungen und elektrische Steuerleitungen verbindbar. Die Antriebsenergie für den Leistungsschalter liefert ein Hydraulikspeicher der unter dem Leistungsschalter fest installiert ist.

Ist eine Kontrolle und Wartung der Unterbrechereinheiten des Leistungsschalters notwendig, so müssen zunächst die zur Steuereinheit führenden Verbindungen nach Absenkung des Öldrucks im Antriebssystem gelöst und die Steuereinheit entfernt werden. Erst danach kann die aus Getriebegehäuse und Unterbrechereinheiten bestehende Baueinheit nach Lösen der Schraubverbindungen aus dem Druckbehälter des Leistungsschalters herausgefahren werden, wobei seitlich an der Montageplatte befestigte Fahrrollen jeweils auf einer seitlich am Druckbehälter befestigten und über diesen waagerecht hinausragende Fahrschienen, die somit ein Traggerüst bilden entlang rollen. Die herausgezogenen aber auf dem Traggerüst verbleibenden Unterbrechereinheiten sind zwar leicht zugänglich, jedoch ist durch die Lösung der Verbindung zwischen dem Hydraulikspeicher und dem Hydraulikzylinder und der Steuereinheit des Antriebs außer der Löschfähigkeit auch die mechanische Funktionsfähigkeit des Leistungsschalters aufgehoben.

Der Erfindung liegt die Aufgabe zugrunde die Handhabung von Leistungsschaltern mit horizontaler Achse in gekapselten, druckgasisolierten Hochspannungsschaltanlagen bei Montage und Wartungsarbeiten noch weiterhin zu vereinfachen, damit diese Arbeiten kostengünstiger und zeitsparend durchgeführt werden können.

Zur Lösung dieser Aufgabe ist eine gekapselte, druckgasisolierte Hochspannungsschaltanlage der eingangs beschriebenen Art gemäß der Erfindung so ausgebildet daß die Basisplatte als Tragelement für sämtliche Teile des Antriebs- und Löschsystems dient einschließlich Steuereinheit und Hydraulikspeicher das über auf dem Boden oder Fundament rollende Fahrrollen oder an einem Kran hängend bewegbar ist.

Die Unterbrechereinheiten des Leistungsschalters werden also zusammen mit allen zur Betätigung der Schaltkontakte notwendigen Antriebs-, Versorgungs- und Steuervorrichtungen gemeinsam bewegt und mit Hilfe der über den Boden oder Fundament rollenden Fahrrollen oder eines vorhandenen, ausreichend leistungsfähigen Krans aus dem Druckbehälter gefahren. Dadurch bleiben die Unterbrechereinheiten mechanisch voll funktionsfähig und können auch im separaten, ausgefahrenen Zustand mechanisch überprüft und geschaltet werden, z. B. nach Aufbau in einem Prüffeld. Eine besondere, die Bewegungsmöglichkeit im Raum nach dem Ausfahren einschränkende Tragvorrichtung ist nicht notwendig, die Basisplatte welche auch. die Stirnwand des Druckbehälters bildet ist alleiniges und freibewegliches Tragelement für alle an ihr montierten Antriebs-, Versorgungs- und Steuerelemente. Für diese müssen nur über elektrische Steckverbindungen die Stromversorgung bzw. Feld- und Anlagensteuerung hergestellt bzw. gelöst werden.

Es ist vorteilhaft, daß mindestens drei Fahrrollen lösbar so an der Basisplatte befestigt sind, daß die durch den Schwerpunkt der zu bewegenden Baueinheit gehende Vertikale sich innerhalb der von den Fahrrollen begrenzten Fläche befindet. Die Fahrrollen liegen dadurch genügend weit voneinander bzw. von der Basisplatte entfernt um die Lage der Baueinheit deren Schwerpunkt etwa in der Ebene der Basisplatte liegt zu stabilisieren und ein Kippen zu verhindern. Da die Befestigung der Fahrrollen lösbar ausgebildet ist können die Fahrrollen nach der Montage bzw. nach den Wartungsarbeiten wieder von der Basisplatte entfernt werden so daß ein Satz von Fahrrollen für eine Hochspannungsschaltanlage mit mehreren Leistungsschaltern ausreicht. Die jeweilige Anpassung an die räumlichen Verhältnisse ist erleichtert wenn die Fahrrollen höhenverstellbar sind.

Im folgenden sei die Erfindung noch anhand des in den Fig. und 2 schematisch dargestellten Ausführungsbeispiels näher erläutert.

Fig. 1 zeigt eine Seitenansicht einer gemäß der Erfindung ausgebildeten dreipolig gekapselten druckgasisolierten Hochspannungsschaltanlage mit teilweise geschnittenem Druckbehälter des Leistungsschalters.

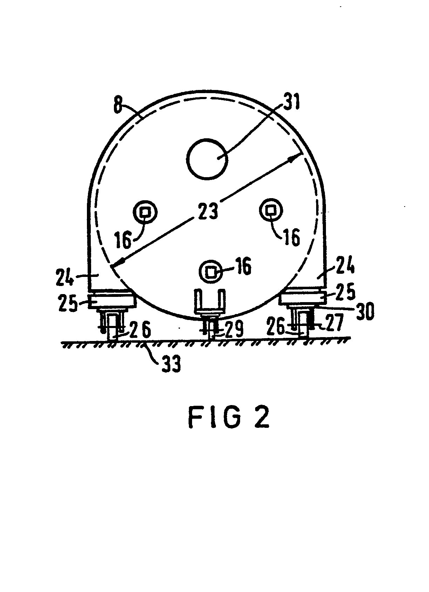

Fig. 2 zeigt eine Vorderansicht auf die Basisplatte mit den Fahrrolen bei der die auf der Außenseite der Basisplatte befestigten Antriebs-Versorgungs-, und Steuereinrichtungen weggelassen sind.

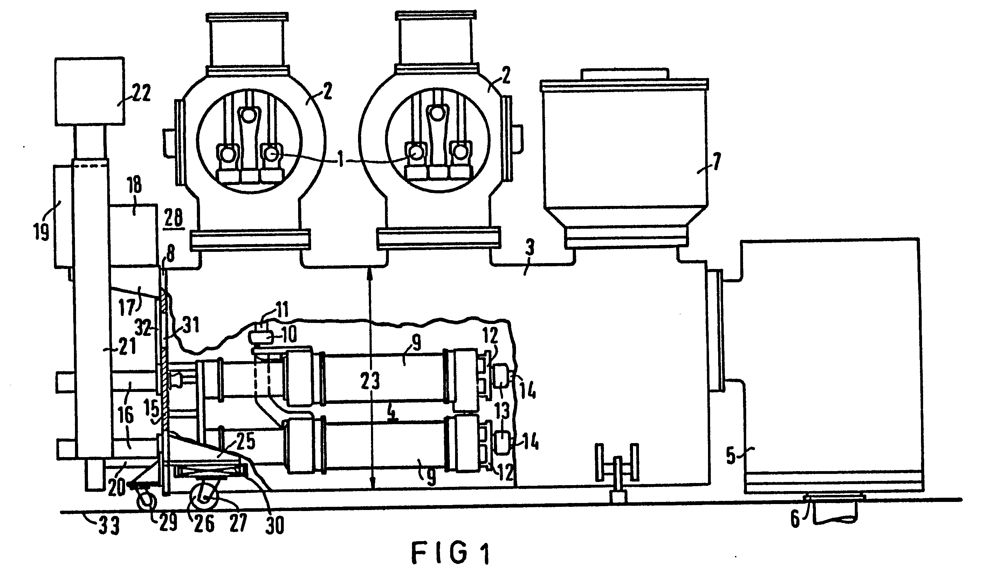

Bei der in Fig. 1 dargestellten dreipolig gekapselten, druckgasisolierten Hochspannungsschaltanlage handelt es sich um ein mit $SF_6$ isoliertes mit zwei Sammelschienensystemen 1 verbundenes Kabelanschlußfeld. Jedes Sammelschienensystem 1 ist mit den entsprechenden Trennern in einem Druckbehälter 2 angeordnet der von einem unterhalb liegenden rohrförmigen Druckbehälter 3 getragen wird. Dieser Druckbehälter 3 enthält außer dem mit horizontaler Achse angeordneten Leistungsschalter 4 nicht dargestellte Erdungsschalter, einen Stromwandler und die zu den benachbarten Feldteilen führenden Stromleitungen.

In der Verlängerung der Längsachse des Druckbehälters 3 liegt der Druckbehälter 5, in dessen Innern nicht dargestellte Anschlußteile nebst Trenner und Erder für die Verbindung zum herausführenden Kabel 6 liegen. Weiterhin trägt der Druckbehälter 3 noch einen Druckbehälter 7 mit einem Spannungswandler.

Die linke Stirnseite des Druckbehälters 3 ist durch die Basisplatte 8 verschlossen. An dieser Basisplatte 8 sind die drei waagerecht liegenden Unterbrechereinheiten 9 des Leistungsschalters 4 befestigt. Diese sind zum einen über Schraubverbindungen 10 mit den Anschlußleitern 11, die zu den beiden Sammelschienensystemen 1 führen, verbunden. Zum anderen sind jeweils an ihrer Stirnfläche 12 Steckverbindungen 13 vorgesehen die über einen Anschluß 14 einfahrbar sind, der jeweils die Verbindung zum Stromwandler bzw. Kabelanschluß herstellt.

Auf der Außenseite 15 der Basisplatte 8 sind von außen frei zugängliche, waagerecht liegende Hydraulikzylinder 16 angeordnet, die jeweils durch die Basisplatte 8 geführt und mit einer Unterbrechereinheit 9 verbunden sein deren dargestellten Schaltkontakte sie betätigen. An der Basisplatte 8 ist außerdem eine obere Tragkonsole 17 befestigt, die alle für die Betätigung des Leistungsschalters 4 erforderlichen Hydraulikaggregate 18, die Steuereinheit 19 und den senkrecht angeordneten wegen seiner Länge noch durch einen unteren Träger 20 abgestützen Hydraulikspeicher 21 mit einem darüberliegenden Ölbehälter 22 trägt. Dieser liefert die für die Betätigung der Unterbrechereinheiten 9 des Leistungsschalters 4 erforderliche Antriebsenergie.

Die Basisplatte 8 ist größer als der Durchmesser 23 des rohrförmigen Druckbehälters 8. Sie ist in der unteren Hälfte mit seitlichen Ansätzen 24 versehen an denen Träger 25 für die seitlichen Fahrrollen 26 befestigt sind, deren Achsen 27 in Längsrichtung gesehen einen Abstand zur Basisplatte 8 aufweisen so daß sich die Fahrrollen 26 seitlich unterhalb des rohrförmigen Teils des Druckbehälters 3 befinden. Außerdem ist unterhalb der Basisplatte 8 eine mittlere Fahrrolle 29 angeordnet, die mit Abstand vor der Außenseite 15 der Basisplatte 8 liegt. Der Abstand zwischen der Basisplatte 8 mit der mittleren Fahrrolle 29 und den seitlichen Fahrrollen 26 ist dabei so gewählt daß die durch den Schwerpunkt der aus den Unterbrechereinheiten 9 der Basisplatte 8, den Hydraulikzylindern 16 dem Hydraulikaggregat 18, der Steuereinheit 19 und dem Hydraulikspeicher 21 mit dem Ölbehälter 22 gebildeten Baueinheit 28 gehende Vertikale sich innerhalb der durch die seitlichen Fahrrollen 26 und die mittlere Fahrrolle 29 begrenzten Fläche befindet. Auf diese Weise ist die Baueinheit 28 in ihrer Lage stabilisiert und ein Kippen beim Ausfahren der Baueinheit 28 aus dem Druckbehälter 3 ist vermieden,

Die Befestigung der seitlichen Fahrrollen 26 am Träger 25 sowie die der mittleren Fahrrolle 29 an der Basisplatte 8 ist lösbar ausgebildet, so daß nach Beendigung der Montage- bzw. Wartungsarbeiten die Fahrrollen 26 und 29 von der Basisplatte 8 abgenommen werden können so daß sie für eine andere Baueinheit 23 eines anderen Schaltfeldes mit im Druckbehälter 3 waagerecht liegendem Leistungsschalter 4 von neuem verwendet werden können. Zur Erleichterung der Anpassung ist in den Befestigungen der Fahrrollen 26 eine Höhenverstellvorrichtung 30 mit verstellbarer schiefer Ebene vorgesehen während die leichter zugängliche mittlere Fahrrolle 29 in bekannter, nicht dargestellter Weise höhenverstellbar ist, z.B. durch Schraubbolzen.

In der Basisplatte 8 ist außerdem ein mittleres, oberhalb der Unterbrechereinheiten 9 liegendes Mannloch 31 vorgesehen, durch das die im Innern des Druckbehälters 3 liegenden Schraubverbindungen 10 zwischen den Anschlußleitungen 11 und den Unterbrechereinheiten 9 zugänglich sind. Die Antriebs-, Versorgungs- und Steuersysteme der Baueinheit 28, die vor der Druckplatte 3 liegen, sind so angeordnet daß das Mannloch 31 von der Außenseite 15 her frei zugänglich ist. Es wird durch einen Montagedeckel 32 verschlossen.

Die verfahrbare Baueinheit 28, deren hauptsächliches Tragelement die Basisplatte 8 bildet enthält also alle Unterbrechereinheiten 9 des Leistungsschalters 4 und die zur Betätigung seiner Schaltstücke erforderlichen Antriebs-, Versorgungs- und Steuereinrichtungen. Nach Lösen der nicht dargestellten elektrischen Steckverbindungen der Baueinheit 28 zur Stromversorgung bzw. Feld- und Anlagensteuerung und nach dem Öffnen der Schraubverbindungen 10 durch das Mannloch 31 hindurch und dem Lösen der Befestigungsmittel der Basisplatte 8 an dem Druckbehälter 3 läßt sich die Baueinheit 28 in einfachster Weise aus dem Druckbehälter 3 herausfahren und ist dann gegenüber diesem frei beweglich da die Fahrrollen 26, 29 auf dem Boden bzw. Fundament 33 der Hochspannungsschaltanlage rollen. Die Unterbrechereinheiten sind für Kontrollen bzw. Wartungsarbeiten frei zugänglich. Außerdem besteht die Möglichkeit die Baueinheit 28, da deren mit ihr verbundene Unterbrechereinheiten 9 des Leistungsschalters 4 ihre mechanische Funktionsfähigkeit nicht verloren haben in einem Prüffeld nach Herstellung entsprechender Prüfstromverbindungen auch zu prüfen.

**Patentansprüche**

1. Gekapselte druckgasisolierte Hochspannungsschaltanlage mit einem unter anderen Druckbehältern liegenden, insbesondere rohrförmigen, Druckbehälter (3) aus elektrisch leitfähigem Material für den mit horizontaler, Achse angeordneten Leistungsschalter (4), bei der eine Stirnwand dieses Druckbehälters durch eine über Fahrrollen ausfahrbare Basisplatte (8) gebildet ist, auf welcher auf der dem Innern des Druckbehälters zugewandten Seite die über Steck- bzw. Schraubverbindungen mit den anschließenden Stromleitern (1) lösbar verbindbaren Unterbrechereinheiten (9) des Leistungsschalters befestigt sind, während die Außenseite der Basisplatte Antriebsteile trägt dadurch gekennzeichnet daß die Basisplatte (8) als Tragelement für sämtliche Teile (9, 16, 18, 19, 21, 22) des Antriebs- und Löschsystems dient, einschließlich Steuereinheit (19) und Hydraulikspeicher (21), das über auf dem Boden oder Fundament (33) rollende Fahrrollen (26, 29) oder an einem Kran hängend bewegbar ist.

2. Gekapselte druckgasisolierte Hochspannungsschaltanlage nach Anspruch 1, dadurch gekennzeichnet daß mindestens drei Fahrrollen (26, 29) lösbar so an der Basisplatte (8) befestigt sind, daß die durch den Schwerpunkt der zu bewegenden Baueinheit (28) gehende Vertikale sich innerhalb der von den Fahrrollen (26, 29) begrenzten Fläche befindet.

3. Gekapselte druckgasisolierte Hochspannungsschaltanlage nach Anspruch 2, dadurch gekennzeichnet, daß eine mittlere Fahrrolle (29) vor der Außenseite (15) liegt, während zwei seitliche Fahrrollen (26) hinter der Basisplatte (8) liegen.

4. Gekapselte, druckgasisolierte Hochspannungsschaltanlage nach Anspruch 2 oder 3, dadurch gekennzeichnet, daß die Fahrrollen (26, 29) höhenverstellbar befestigt sind.

5. Gekapselte, druckgasisolierte Hochspannungsschaltanlage nach Anspruch 1, dadurch gekennzeichnet, daß die auf der Außenseite (15) der Basisplatte (8) liegenden Teile (16, 18, 19, 21, 22) des Antriebs- und Steuersystems so angeordnet sind daß ein mittleres oberhalb der Unterbrechereinheiten (9) liegendes durch einen Montagedeckel (32) verschließbares Mannloch (31) in der Basisplatte (8) von der Außenseite (15) her frei zugänglich ist.

**Claims**

1. An encapsulated, pressurised-gas-insulated high voltage switch arrangement comprising a pressure container (3) which in particular is tubular, is located beneath other pressure containers, and consists of electrically conductive material for the power switch (4) which is arranged with a horizontal axis, wherein an end wall of this pressure container is formed by a base plate (8) which can be removed via moving rollers and on which, on the side facing towards the interior of the pressure container, the interrupter units (9) of the power switch - which can be detachably connected to the adjoining current conductors (1) via plug or screw connections - are secured, whilst the outside of the base plate bears drive components, characterised in that the base plate (8) serves as carrier element for all the components (9, 16, 18, 19, 21, 22) of the drive and extinguishing system, including the control unit (19) and hydraulic accumulator (21), and can be moved via moving rollers (26, 29), which roll over the floor or base (33), or can be suspended from a crane.

2. An encapsulated, pressurised-gas-insulated high voltage switch arrangement as claimed in claim 1, characterised in that at least three moving rollers (26, 29) are detachably secured to the base plate (8) in such manner that the vertical which passes through the centre of gravity of the unit (28) which is to be moved is located within the area delimited by the moving rollers (28, 29).

3. An encapsulated, pressurised-gas-insulated high voltage switch arrangement as claimed in claim 2, characterised in that a central moving roller (29) is located in front of the outer side (15), whilst two lateral moving rollers (26) are located behind the base plate (8).

4. An encapsulated, pressurised-gas-insulated high voltage switch arrangement as claimed in claim 2 or claim 3, characterised in that the moving rollers (26, 29) are attached so as to be height-adjustable.

5. An encapsulated, pressurised-gas-insulated high voltage switch arrangement as claimed in claim 1, characterised in that those parts (16, 18, 19, 21, 22) of the drive and control system which are arranged on the outer side (15) of the base plate (8) are arranged in such manner that a central man-hole (31) which is arranged in the base plate (8), is located above the interrupter units (9) and can be closed by a mounting cover plate (32) is freely accessible from the exterior (15).

## Revendications

1. Installation haute tension blindée de distribution d'électricité à isolation par un gaz, avec une cuve sous pression (2) située entre autres cuves sous pression, en particulier de forme tubulaire et fait avec un matériau électriquement conducteur, destiné à l'interrupteur de puissance (4) disposé avec son axe en position horizontale, du genre dans laquelle une paroi frontale de cette cuve sous pression est constituée par une plaque de base (8) qui est susceptible d'être dégagée à l'aide de galets de roulement et sur laquelle sont fixées, sur le côté tourné vers l'intérieur de la cuve, les unités de coupure (9) de l'interrupteur de puissance, qui sont susceptibles d'être fixés de façon détachable, par des liaisons à enfichage ou à vissage avec les conducteurs électriques (1), alors que le côté extérieur de la plaque de base porte des éléments de commande, caractérisée par le fait que la plaque de base (8) sert d'élément de support pour tous les éléments (9, 16, 18, 19, 21, 22) du système de commande et d'extinction, y compris l'unité de contrôle (19) et l'accumulateur hydraulique (21), lequel est susceptible d'être déplacé à l'aide de galets de roulement (26, 29) roulant sur le sol ou sur le socle (33) ou en position de suspension sur une grue.

2. Installation haute tension blindée de distribution d'électricité à isolation par un gaz selon la revendication 1, caractérisée par le fait qu'au moins trois galets de roulement (26, 29) sont fixés de façon détachable à la plaque de base (8) de manière que la verticale passant par l'unité de construction (28) à déplacer, passe par un point situé à l'intérieur de la surface délimitée par les galets de roulement (26, 29).

3. Installation haute tension blindée de distribution d'électricité à isolation par un gaz selon la revendication 2, caractérisée par le fait que le galet de roulement médian (29) se situe à l'avant du côté extérieur (15), alors que les deux galets de roulement latéraux (26) se situent à l'arrière de la plaque de base (8).

4. Installation haute tension blindée de distribution d'électricité à isolation par un gaz selon la revendication 2 ou 3, caractérisée par le fait que les galets de roulement (26, 29) sont fixés de manière à être réglables en hauteur.

5. Installation haute tension blindée de distribution d'électricité à isolation par un gaz selon la revendication 1, caractérisée par le fait que les éléments (16, 18, 19, 21, 22) du système de commande et de contrôle, qui se situent sur le côté extérieur (15) de la plaque de base sont disposés de telle manière qu'un trou d'homme médian (31), ménagé dans la plaque de base (8), situé au dessus des unités de l'interrupteur (9) et susceptible d'être obturé par un couvercle de montage (32), est librement accessible du côté extérieur (15).

FIG 1

0 086 734

FIG 2